# EUROPEAN PATENT APPLICATION

(11) **EP 4 721 913 A1**
(43) Date of publication of application: **08.04.2026**
(21) Application number: 24856341.3
(22) Date of filing: 09.08.2024
(51) Int. Cl.: B23Q 3/06, B23Q 7/04, B25J 15/08

(54) **GRIPPING DEVICE**

(30) Priority: 21.08.2023 JP 2023133881
(71) Applicant: Kosmek Ltd., Kobe-shi, Hyogo 651-2241 (JP)
(72) Inventor: TSUCHIDA, Takeshi, Kobe-shi, Hyogo 651-2241 (JP)
(74) Representative: Dolleymores
(86) International application number: PCT/JP2024/028675
(87) International publication number: WO 2025/041650

(57) **Abstract**

A gripping device includes: an output member (3); a first claw member (16); a second claw member (17); a first pin member (22) provided in the first claw member (16), the first pin member (22) being provided inside a first wedge groove (12) formed in the output member (3); a second pin member (26) provided in the second claw member (17), the second pin member (26) being provided inside a second wedge groove (13) formed in the output member (3); and an output member guide member (9) fixed to a housing (1), the output member guide member (9) being provided in an output member guide groove (8) formed in an end portion in the axial direction of an output member main body portion (4) of the output member (3).

## Description

### [Technical Field]

The present invention relates to a gripping device which is configured to grip and fix a component such as a workpiece.

### [Background Art]

An example of such a device is a gripper described in Patent Literature 1. This gripper is equipped with an actuator fixed to a fluid piston. This actuator moves two flange portions in opposite directions.

### [Citation List]

### [Patent Literatures]

[Patent Literature 1] Japanese Laid-Open Patent Publication No. 2001-260066

### [Summary of Invention]

### [Technical Problem]

The above-described actuator is fixed to a leading end portion of a fluid piston rod in a cantilevered manner. When the actuator presses the flange portion, a reaction force acts on the actuator from the flange portion, and a moment (force of rotating the actuator) is applied to the actuator. This moment hinders stable movement of the fluid piston in the axial direction.

An object of the present invention is to provide a gripping device that can stably move an output member.

### [Solution to Problem]

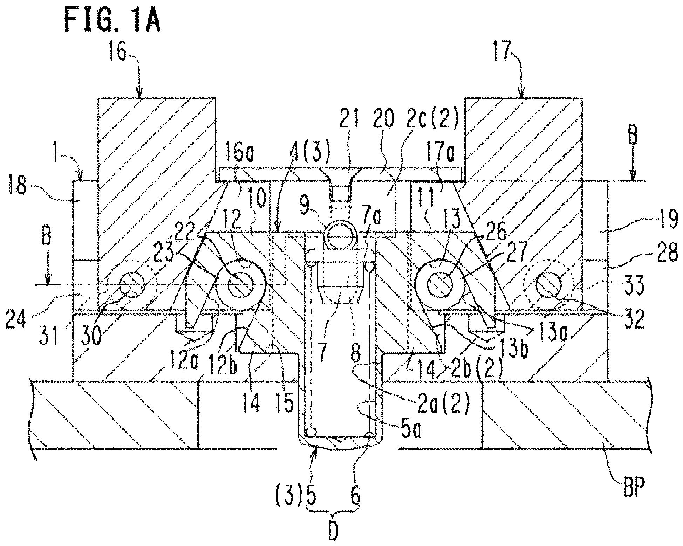

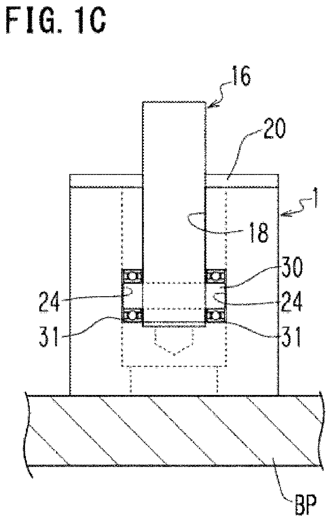

To achieve the object above, a gripping device disclosed in the subject application is arranged as described below, as shown in FIG. 1A to FIG. 4B, for example.

(1) The gripping device includes: a housing 1; an output member 3 which is provided in a hole 2 formed in the housing 1 to be movable in an axial direction of the hole 2; a first claw member 16 which is provided next to the output member 3, the first claw member 16 being provided in a first groove 18 formed in the housing 1 so as to be movable in a direction intersecting with the axial direction; a second claw member 17 which is provided next to the output member 3, the second claw member 17 being provided in a second groove 19 formed in the housing 1 so as to be movable in a direction intersecting with the axial direction; a first pin member 22 which is provided in the first claw member 16, the first pin member 22 being provided inside a first wedge groove 12 formed in an output member main body portion 4 of the output member 3; a second pin member 26 which is provided in the first claw member 17, the second pin member 26 being provided inside a second wedge groove 13 formed in the output member main body portion 4; an output member guide member 9 which is fixed to the housing 1, the output member guide member 9 being provided in an output member guide groove 8 formed in an end portion in the axial direction of the output member main body portion 4; and a drive unit D which is configured to move the output member 3 in the axial direction. When the output member 3 is moved in the axial direction, an wedge surface 12a or 12b of the first wedge groove 12 presses the first pin member 22 and an wedge surface 13a or 13b of the second wedge groove 13 presses the second pin member 26, so as to cause the first claw member 16 and the second claw member 17 to move in different directions.

In the gripping device disclosed in the subject application, the following functions and effects are provided. The output member moves in the axial direction while being supported (guided) by the output member guide member. Therefore, when the output member moves each claw member, the force (moment) of rotating the output member is received by the output member guide member. Therefore, the gripping device makes it possible to stably move the output member as compared to conventional cases.

(2) The gripping device of (1) may be arranged such that the drive unit D includes: an operating portion 5 of the output member 3, the operating portion 5 being provided on the side opposite to the output member guide groove 8 in the axial direction in the output member 3, being supported by an inner surface of the hole 2, and protruding outward from the hole 2; and a spring 6 which is provided in a cylindrical hole 5a formed in the operating portion 5 and is configured to bias the output member 3 in a direction opposite to a direction in which the operating portion 5 is pressed into the hole 2.

According to this configuration, the output member (output member main body portion) can be driven without using pressure fluid such as compressed air or pressure oil.

(3) The gripping device of (2) may be arranged such that the spring 6 is received by the output member guide member 9.

With this configuration, the number of components constituting the gripping device can be reduced.

(4) The gripping device of any one of (1) to (3) may be arranged such that an end portion of the first pin member 22 is provided in a first guide groove 24 formed in an inner surface of the first groove 18. Furthermore, an end portion of the second pin member 26 may be provided in a second guide groove 28 formed in an inner surface of the second groove 19.

This configuration makes it possible to stabilize the movement of each claw member.

(5) The gripping device of (4) may further include a first auxiliary pin member 30 which is provided in the first claw member 16 and a second auxiliary pin member 32 which is provided in the second claw member 17. Furthermore, an end portion of the first auxiliary pin member 30 may be provided in the first guide groove 24 whereas an end portion of the second auxiliary pin member 32 may be provided in the second guide groove 28.

This configuration makes it possible to further stabilize the movement of each claw member.

(6) The gripping device of any one of (1) to (5) may be arranged such that a rolling bearing 23 for the first wedge groove is provided between the first pin member 22 and the first wedge groove 12. Furthermore, a rolling bearing 27 for the second wedge groove may be provided between the second pin member 26 and the second wedge groove 13.

This configuration makes it possible to further stabilize the movement of each claw member.

(7) The gripping device of (4) or (5) may be arranged such that the end portion of the first pin member 22 is provided in the first guide groove 24 via a first rolling bearing 25. Furthermore, the end portion of the second pin member 26 may be provided in the second guide groove 28 via a second rolling bearing 29.

This configuration makes it possible to further stabilize the movement of each claw member.

(8) The gripping device of (5) may be arranged such that the end portion of the first auxiliary pin member 30 is provided in the first guide groove 24 via a first auxiliary rolling bearing 31. Furthermore, the end portion of the second auxiliary rolling bearing 32 is provided in the second guide groove 28 via a second auxiliary pin member 33.

This configuration makes it possible to further stabilize the movement of each claw member.

### [Advantageous Effects of Invention]

The present invention makes it possible to provide a gripping device that can stably move an output member.

### [Brief Description of Drawings]

FIG. 1A relates to First Embodiment and is a diagram of a state in which no external force is applied to an operating portion of a gripping device, and is an A-A sectional view of FIG. 1B.
FIG. 1B is a cross sectional view taken along the line B-B of FIG. 1A.
FIG. 1C is a left side view of the gripping device shown in FIG. 1A and FIG. 1B.
FIG. 2 shows a state in which the operating portion is pressed into a housing in the gripping device shown from FIG. 1A to FIG. 1C, and corresponds to FIG. 1A.
FIG. 3 shows a locked state of the gripping device shown in FIGs. 1A to 1C, and corresponds to FIG. 1A.
FIG. 4A relates to Second Embodiment and is a diagram of a state in which no external force is applied to an operating portion of a gripping device, and is an A-A sectional view of FIG. 4B.
FIG. 4B is a cross sectional view taken along the line B-B of FIG. 4A, and corresponds to FIG. 1A that shows First Embodiment.
FIG. 5 shows a modification of First Embodiment and a method of use thereof.
FIG. 6 shows a state subsequent to the state shown in FIG. 5.
FIG. 7 shows a state subsequent to the state shown in FIG. 6.

### [Description of Embodiments]

FIG. 1A to FIG. 3 show First Embodiment. To begin with, the following will describe the configuration of a gripping device of First Embodiment.

A base plate BP is fixed to a table (not illustrated) such as a machine tool, and a housing 1 is fixed to the base plate BP.

An output member 3 is provided in a hole 2 formed in a central portion of the housing 1. The output member 3 is arranged to be movable in the axial direction of the hole 2. The hole 2 is composed of a first hole 2a, a second hole 2b, and a third hole 2c that are coaxial with each other. The first hole 2a, the second hole 2b, and the third hole 2c are provided in this order from the bottom side of the housing 1. The first hole 2a is a circular hole and is the smallest hole among the first hole 2a to the third hole 2c.

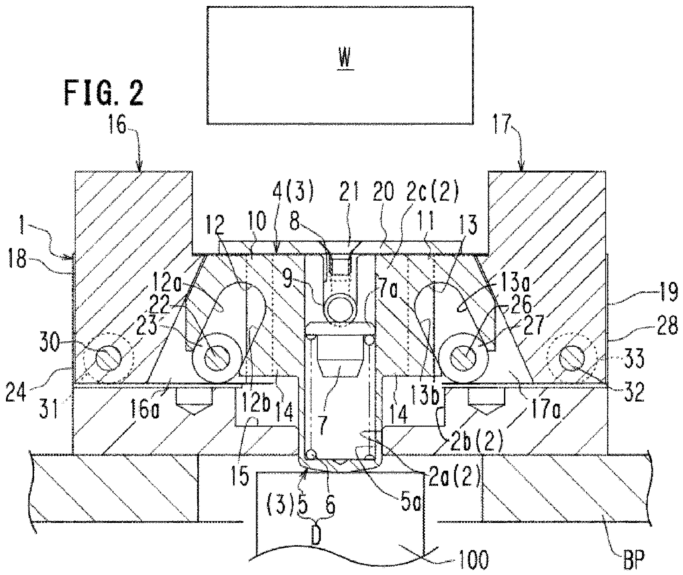

The output member 3 is composed of an output member main body portion 4 and an operating portion 5. The operating portion 5 is bottomed and cylindrical in shape, is supported by the inner surface of the first hole 2a, and protrudes outward from the first hole 2a of the housing 1. A spring 6 is provided in the cylindrical hole 5a formed in the operating portion 5. As the operating portion 5 is pressed into the first hole 2a by, for example, a member 100 (see FIG. 2), the output member 3 ascends. The spring 6 biases the output member 3 in a direction opposite to the direction in which the operating portion 5 is pressed into the first hole 2a. When no external force is acting on the operating portion 5, the output member 3 descends due to the biasing force of the spring 6. The cylindrical hole 5a extends into the output member main body portion 4 and penetrates the output member main body portion 4. In this cylindrical hole 5a, a spring receiver 7 is provided. One end of the spring 6 is in contact with a flange portion 7a of the spring receiver 7, and the other end of the spring 6 is in contact with the bottom surface of the cylindrical hole 5a.

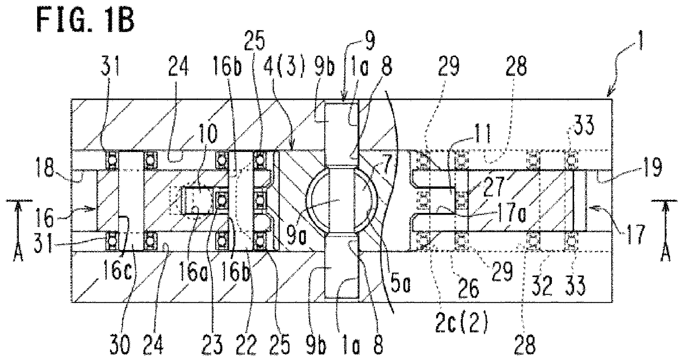

U-shaped output member guide grooves 8 are provided in an end portion of the output member main body portion 4 in the axial direction (i.e., an end portion opposite to the operating portion 5). As shown in FIG. 1B, two (a pair of) output member guide grooves 8 are provided in the output member main body portion 4. In these output member guide grooves 8, an output member guide member 9 is provided. The output member guide member 9 is a columnar (pin-shaped) member, and is composed of a small-diameter columnar portion 9a and large-diameter columnar portions 9b sandwiching the small-diameter columnar portion 9a. Each large-diameter columnar portion 9b is inserted into a hole 1a formed in the housing 1, with the result that the output member guide member 9 is attached to the housing 1. The spring 6 is received by the small-diameter columnar portion 9a of the output member guide member 9 via the spring receiver 7. The spring 6 and the operating portion 5 constitute a drive unit D that is configured to move the output member 3 in the axial direction of the hole 2. As the spring 6 biases the spring receiver 7 upward, the spring receiver 7 is fitted with the small-diameter columnar portion 9a. Due to this, the output member guide member 9 is prevented from dropping off from the holes 1a (i.e., fixed to the housing 1).

The output member main body portion 4 has a first plate portion 10 and a second plate portion 11 at the outer circumferential portion. The first plate portion 10 and the second plate portion 11 are positioned with a phase difference of 180 degrees from each other in the circumferential direction of the output member main body portion 4. A U-shaped first wedge groove 12 is provided in a side face of the first plate portion 10. The first wedge groove 12 is inclined relative to the axial direction of the hole 2. The first wedge groove 12 is inclined relative to the axial direction of the hole 2 in such a way that a part closer to the lower end of the first plate portion 10 is farther from the central axis of the operating portion 5. Furthermore, a U-shaped second wedge groove 13 is provided in a side face of the second plate portion 11. The second wedge groove 13 is inclined relative to the axial direction of the hole 2, too. The second wedge groove 13 is inclined relative to the axial direction of the hole 2 in such a way that a part closer to the lower end of the second plate portion 11 is farther from the central axis of the operating portion 5. The first wedge groove 12 and the second wedge groove 13 are identical in inclination angle relative to the axial direction of the hole 2. The first wedge groove 12 is provided in the first plate portion 10 and the second wedge groove 13 is provided in the second plate portion 11 such that the first wedge groove 12 and the second wedge groove 13 are symmetrical about the axial center of the hole 2. Furthermore, the first plate portion 10 and the second plate portion 11 are formed to radially protrude from the output member main body portion 4 such that the first plate portion 10 and the second plate portion 11 are symmetrical about the axial center of the hole 2. As the output member 3 is moved in the up-down direction, a first claw member 16 and a second claw member 17 are simultaneously moved by the same distance in directions toward each other in a horizontal plane (in the same plane). It is noted that the first plate portion 10 and the second plate portion 11 are identical in shape and size.

The output member main body portion 4 is provided with a stopper portion 14 at the border between the output member main body portion 4 and the operating portion 5. When no external force is acting on the operating portion 5 and the workpiece W which is a gripping object is not present, the output member 3 descends due to the biasing force of the spring 6, and as shown in FIG. 1A, the stopper portion 14 of the output member main body portion 4 impinges on a stepped surface 15 between the first hole 2a and the second hole 2b. As a result, the output member 3 biased by the spring 6 stops.

The above-described hole 2 where the output member 3 is provided is covered with a lid member 20. The lid member 20 is fixed to the housing 1 with a screw 21. The lid member 20 is provided to prevent debris, etc. from entering the hole 2. The lid member 20 functions as a placement table for the workpiece W, too. The lid member 20 may be omitted.

Next to the output member main body portion 4, two claw members, i.e., the first claw member 16 and the second claw member 17, are provided. The first claw member 16 and the second claw member 17 are arranged with a phase difference of 180 degrees from each other in the circumferential direction of the output member 3. The first claw member 16 and the second claw member 17 are identical in shape and size.

The first claw member 16 is provided in a first groove 18 formed in the housing 1. The first claw member 16 is arranged to be movable in a direction that intersects with the axial direction of the hole 2. The second claw member 17 is provided in a second groove 19 formed in the housing 1. The second claw member 17 is arranged to be movable in a direction that intersects with the axial direction of the hole 2.

In the housing 1, the first groove 18 is formed on one side of the hole 2, and the second groove 19 is formed on the other side of the hole 2. The first groove 18, the hole 2, and the second groove 19 communicate with one another. The first groove 18 and the second groove 19 are arranged on a straight line. In the present embodiment, the axial direction of the hole 2 is orthogonal to the direction in which the first groove 18 and the second groove 19 extend.

The first plate portion 10 of the output member main body portion 4 is provided in a recess 16a formed in a side portion of the first claw member 16. Likewise, the second plate portion 11 of the output member main body portion 4 is provided in a recess 17a formed in a side portion of the second claw member 17.

The first claw member 16 is provided with a first pin member 22. The first pin member 22 is inserted into holes 16b formed on both sides of the recess 16a of the first claw member 16. The first pin member 22 is inserted into the holes 16b to the extent of not rotating. In other words, the first pin member 22 is fixed to the holes 16b to the extent of not being rattled. The first pin member 22 may rotate.

The first pin member 22 is provided in the first wedge groove 12 of the first plate portion 10. As shown in FIG. 1A, a rolling bearing 23 (rolling bearing for the first wedge groove) is provided between the first pin member 22 and the first wedge groove 12. The rolling bearing 23 may be omitted. In this case, the groove width of the first wedge groove 12 and the diameter of the first pin member 22 at the part where the first pin member 22 makes contact with the first wedge groove 12 are arranged to be approximately the same.

In opposing side walls of the first groove 18 formed in the housing 1, first guide grooves 24 are formed, respectively. The first guide groove 24 is formed on the bottom side of the first groove 18. In this first guide groove 24, an end portion of the first pin member 22 is provided. The end portion of the first pin member 22 is provided in the first guide groove 24 via a rolling bearing 25 (first rolling bearing). The rolling bearing 25 may be omitted. In this case, the groove width of the first guide groove 24 and the diameter of the end portion of the first pin member 22 are arranged to be approximately the same.

Being similar to the first claw member 16, the second claw member 17 is provided with a second pin member 26. The second pin member 26 is inserted into holes (not illustrated) formed on both sides of a recess 17a of the second claw member 17. The second pin member 26 is inserted into the above-described holes to the extent of not rotating. In other words, the second pin member 26 is fixed to the holes to the extent of not being rattled. The second pin member 26 may rotate.

The second pin member 26 is provided in the second wedge groove 13 of the second plate portion 11. As shown in FIG. 1A, a rolling bearing 27 (rolling bearing for the second wedge groove) is provided between the second pin member 26 and the second wedge groove 13. The rolling bearing 27 may be omitted. In this case, the groove width of the second wedge groove 13 and the diameter of the second pin member 26 at the part where the second pin member 26 makes contact with the second wedge groove 13 are arranged to be approximately the same.

In opposing side walls of the second groove 19 formed in the housing 1, second guide grooves 28 are formed, respectively. The second guide groove 28 is formed on the bottom side of the second groove 19. In this second guide groove 28, an end portion of the second pin member 26 is provided. The end portion of the second pin member 26 is provided in the second guide groove 28 via a rolling bearing 29 (second rolling bearing). The rolling bearing 29 may be omitted. In this case, the groove width of the second guide groove 28 and the diameter of the end portion of the second pin member 26 are arranged to be approximately the same.

The first claw member 16 is provided with a first auxiliary pin member 30. The first auxiliary pin member 30 is inserted into a hole 16c formed in the first claw member 16. The first auxiliary pin member 30 is inserted into the hole 16c to the extent of not rotating. In other words, the first auxiliary pin member 30 is fixed to the hole 16c to the extent of not being rattled. The first auxiliary pin member 30 may rotate.

An end portion of the first auxiliary pin member 30 is provided in the first guide groove 24 in the same manner as the first pin member 22. The end portion of the first auxiliary pin member 30 is provided in the first guide groove 24 via a rolling bearing 31 (first auxiliary rolling bearing). The rolling bearing 31 may be omitted. In this case, the groove width of the first guide groove 24 and the diameter of the end portion of the first auxiliary pin member 30 are arranged to be approximately the same.

Being similar to the first claw member 16, the second claw member 17 is provided with a second auxiliary pin member 32. The second auxiliary pin member 32 is inserted into a hole (not shown) formed in the second claw member 17. The second auxiliary pin member 32 is inserted into the above-described hole to the extent of not rotating. In other words, the second auxiliary pin member 32 is fixed to the hole to the extent of not being rattled. The second auxiliary pin member 32 may rotate.

An end portion of the second auxiliary pin member 32 is provided in the second guide groove 28 in the same manner as the second pin member 26. The end portion of the second auxiliary pin member 32 is provided in the second guide groove 28 via a rolling bearing 33 (second auxiliary rolling bearing). The rolling bearing 33 may be omitted. In this case, the groove width of the second guide groove 28 and the diameter of the end portion of the second auxiliary pin member 32 are arranged to be approximately the same.

The above-described gripping device operates as follows.

In a state in which there is no workpiece W and no external force is applied to the operating portion 5 of the output member 3 as shown in FIG. 1A, the output member 3 has descended to the lowest position due to the biasing force of the spring 6. The lowest position of the output member 3 is a position of the output member 3 where the stopper portion 14 of the output member main body portion 4 impinges on the stepped surface 15 between the first hole 2a and the second hole 2b. In this state, the wedge surface 12a of the first wedge groove 12 is pressing the first pin member 22 toward the center of the output member 3 via the rolling bearing 23, and the wedge surface 13a of the second wedge groove 13 is pressing the second pin member 26 toward the center of the output member 3 via the rolling bearing 27. Therefore, the first claw member 16 and the second claw member 17 move toward the center of the housing 1, and the gap between the first claw member 16 and the second claw member 17 has become the narrowest. The wedge surface 12a is a wall surface of the first wedge groove 12, and the wedge surface 13a is a wall surface of the second wedge groove 13.

When gripping a workpiece W with the first claw member 16 and the second claw member 17, as shown in FIG. 2, to begin with, the member 100 is moved up and the operating portion 5 is pressed into the hole 2 of the housing 1 against the biasing force of the spring 6. As a result, the output member 3 ascends (moves upward in the axial direction of the hole 2). As the output member 3 ascends, the wedge surface 12b of the first wedge groove 12 presses the first pin member 22 away from the output member 3 via the rolling bearing 23, and the wedge surface 13b of the second wedge groove 13 presses the second pin member 26 away from the output member 3 via the rolling bearing 27. The first claw member 16 and the second claw member 17 move in opposite directions, and the gap between the first claw member 16 and the second claw member 17 widens. The wedge surface 12b is a wall surface of the first wedge groove 12 and opposes the wedge surface 12a. The wedge surface 13b is a wall surface of the second wedge groove 13 and opposes the wedge surface 13a.

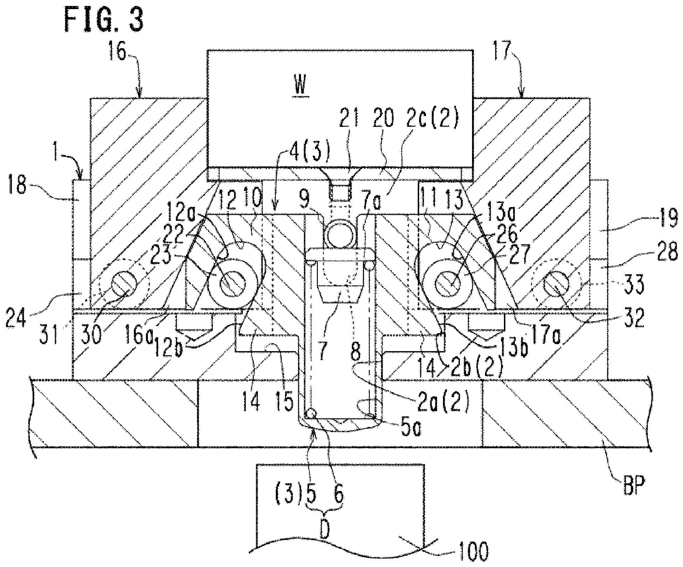

In the state in which the gap between the first claw member 16 and the second claw member 17 is widened, the workpiece W is placed on the lid member 20. Then, by lowering the member 100, the external force acting on the operating portion 5 is released. When the external force is released, the output member 3 descends due to the biasing force of the spring 6 (moves downward in the axial direction of the hole 2). As the output member 3 descends, the wedge surface 12a of the first wedge groove 12 presses the first pin member 22 toward the center of the output member 3 via the rolling bearing 23, and the wedge surface 13a of the second wedge groove 13 presses the second pin member 26 toward the center of the output member 3 via the rolling bearing 27. As a result, the first claw member 16 and the second claw member 17 move toward each other, and the workpiece W is gripped by the first claw member 16 and the second claw member 17 as shown in FIG. 3. At this stage, a gap exists between the stopper portion 14 of the output member main body portion 4 and the stepped surface 15, and the workpiece W is securely gripped by the biasing force of the spring 6.

When releasing the gripping of the workpiece W, the operating portion 5 is pressed into the hole 2 of the housing 1 by moving up the member 100, with the result that the output member 3 ascends. Due to this, the first claw member 16 and the second claw member 17 move in opposite directions, and the gap between the first claw member 16 and the second claw member 17 widens. As a result, the workpiece W can be taken out from between the first claw member 16 and the second claw member 17.

The gripping device of the above-described embodiment has the following advantages.

The output member guide groove 8 is formed in the end portion in the axial direction of the output member main body portion 4 that constitutes the output member 3. The gripping device has the output member guide member 9 that is provided in this output member guide groove 8. The output member guide member 9 is fixed to the housing 1. According to this configuration, the output member 3 moves in the axial direction while being supported (guided) by the output member guide member 9. Therefore, when the output member 3 presses and moves each claw member via the pin member, the force (moment) of rotating the output member 3 acting on the output member 3 is received by the output member guide member 9 fixed to the housing 1. Therefore, it is possible to stably move the output member 3 in the axial direction as compared to conventional cases.

The drive unit D of the output member 3 is composed of the operating portion 5 that protrudes outward from the hole 2 formed in the housing 1 and the spring 6 provided in the operating portion 5 (output member 3). According to this configuration, the output member 3 (output member main body portion 4) can be driven without using pressure fluid such as compressed air or pressure oil. Therefore, the gripping device of the embodiment above does not require a pressure fluid supply source. For this reason, it is possible to reduce the cost of the entire facility. The operating portion 5 may be moved by an object different from the member 100. The operating portion 5 may be moved by pressing the operating portion 5 by a finger, for example.

The spring 6 is received by the output member guide member 9 fixed to the housing 1. The main role of the output member guide member 9 is to receive the moment acting on the output member 3. While the member that receives the elastic force of the spring 6 may be another member, the output member guide member 9 plays an additional role of receiving the elastic force of the spring 6. As the elastic force of the spring 6 is received by the output member guide member 9, the number of components constituting the gripping device can be reduced. Furthermore, the spring receiver 7, which is biased by the spring 6, is fitted with the small-diameter columnar portion 9a of the output member guide member 9, thereby preventing the output member guide member 9 from dropping off from the hole 1a of the housing 1.

The end portion of the first pin member 22 is provided in the first guide groove 24 formed in the inner surface of the first groove 18 of the housing 1. The end portion of the second pin member 26 is provided in the second guide groove 28 formed in the inner surface of the second groove 19 of the housing 1. The first guide groove 24 serves as a guide for the movement of the first pin member 22, and the second groove 19 serves as a guide for the movement of the second pin member 26. This makes it possible to stabilize the movement of the first claw member 16 and the second claw member 17.

The first claw member 16 is provided with the first auxiliary pin member 30 in addition to the first pin member 22. The second claw member 17 is provided with the second auxiliary pin member 32 in addition to the second pin member 26. Because each of the first claw member 16 and the second claw member 17 is provided with a running unit composed of two pin members, the movement of the first claw member 16 and the second claw member 17 is further stabilized.

The rolling bearing 23 is provided between the first pin member 22 and the first wedge groove 12. The rolling bearing 27 is provided between the second pin member 26 and the second wedge groove 13. According to this configuration, the friction force between the first pin member 22 and the first wedge groove 12 and the friction force between the second pin member 26 and the second wedge groove 13 can be reduced, thereby enhancing the transmission efficiency of the force from the output member 3 to the first claw member 16 and the transmission efficiency of the force from the output member 3 to the second claw member 17. This makes it possible to further stabilize the movement of the first claw member 16 and the second claw member 17.

The end portion of the first pin member 22 is provided in the first guide groove 24 via the rolling bearing 25. The end portion of the second pin member 26 is provided in the second guide groove 28 via the rolling bearing 29. According to this configuration, the friction force between the first pin member 22 and the first guide groove 24 and the friction force between the second pin member 26 and the second guide groove 28 can be reduced, and hence the movement of the first claw member 16 and the second claw member 17 is further stabilized.

The same applies to the first auxiliary pin member 30 and the second auxiliary pin member 32. As the friction force can be reduced by interposing the rolling bearings 31 and 33, the movement of the first claw member 16 and the second claw member 17 is further stabilized.

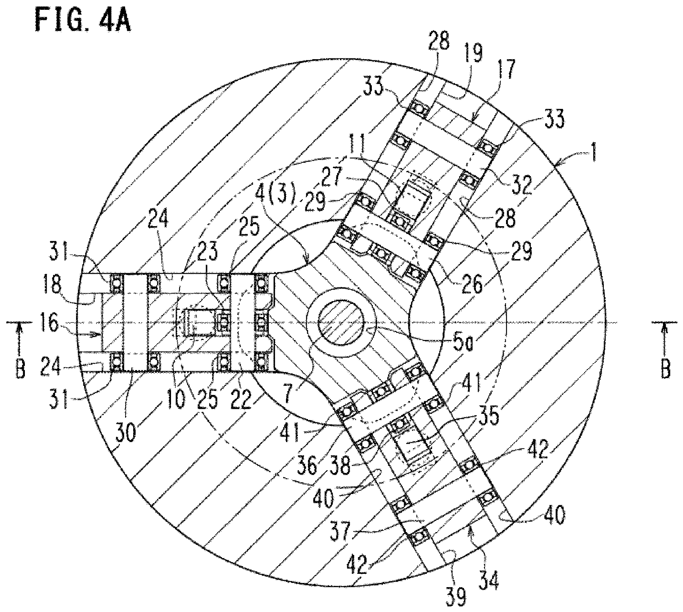

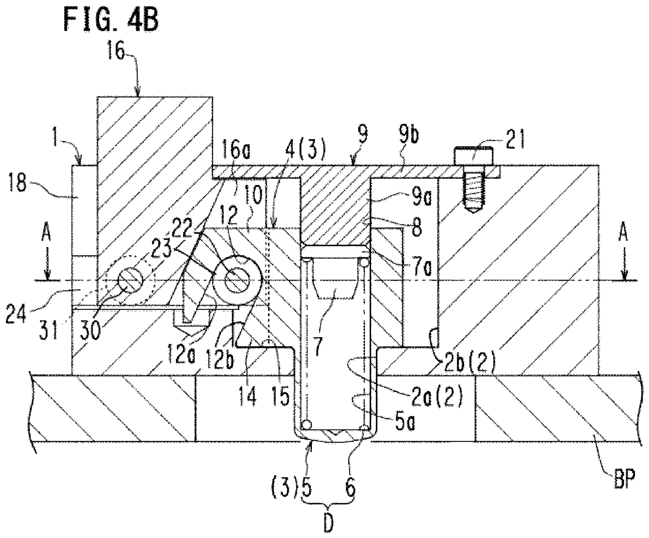

FIG. 4A and FIG. 4B show Second Embodiment. In a gripping device of Second Embodiment, the same components as those in First Embodiment or components that have similar functions as those in First Embodiment are assigned the same reference symbols (the same applies to other embodiments). In the description of Second Embodiment, explanations of configurations that are identical with or similar to those in First Embodiment are appropriately omitted (the same applies to other embodiments).

The shape of the housing 1 of First Embodiment is rectangular in plan view as shown in FIG. 1B. In contrast, the shape of the housing 1 of Second Embodiment is circular in plan view as shown in FIG. 4A.

The gripping device of First Embodiment is equipped with two claw members, namely the first claw member 16 and the second claw member 17. In contrast, the gripping device of Second Embodiment is equipped with three claw members, namely a first claw member 16, a second claw member 17, and a third claw member 34. The claw members 16, 17, and 34 are arranged with a phase difference of 120 degrees from each other in the circumferential direction of the output member 3 (i.e., the claw members are evenly arranged). The shapes and dimensions of the claw members 16, 17, and 34 are identical. The gripping device of First Embodiment is a device configured to grip a workpiece W from two directions. The gripping device of Second Embodiment is a device configured to grip a workpiece W from three directions.

The third claw member 34 is provided in a third groove 39 formed in the housing 1. The third groove 39 corresponds to the first groove 18 and the second groove 19.

An output member main body portion 4 (output member 3) of Second Embodiment has, at its outer circumferential portion, a third plate portion 35 in addition to a first plate portion 10 and a second plate portion 11. The third plate portion 35 corresponds to the third claw member 34. The plate portions 10, 11, and 35 are arranged with a phase difference of 120 degrees from each other in the circumferential direction of the output member 3 (i.e., the plate portions are evenly arranged). The shapes and dimensions of the plate portions 10, 11, and 35 are identical.

The third claw member 34 is provided with a third pin member 36 and a third auxiliary pin member 37. The third pin member 36 corresponds to the first pin member 22 and the second pin member 26. The third auxiliary pin member 37 corresponds to the first auxiliary pin member 30 and the second auxiliary pin member 32.

A rolling bearing 38 (rolling bearing for a third wedge groove) is provided at a longitudinal central portion of the third pin member 36. The rolling bearing 38 corresponds to the rolling bearing 23 (rolling bearing for the first wedge groove) and the rolling bearing 27 (rolling bearing for the second wedge groove).

In opposing side walls of the third groove 39 formed in the housing 1, third guide grooves 40 are formed, respectively. The third guide groove 40 corresponds to the first guide groove 24 and the second guide groove 28.

An end portion of the third pin member 36 is provided in the third guide groove 40 via a rolling bearing 41 (third rolling bearing). The rolling bearing 41 corresponds to a rolling bearing 25 (first rolling bearing) and a rolling bearing 29 (second rolling bearing).

An end portion of the third auxiliary pin member 37 is provided in the third guide groove 40 via a rolling bearing 42 (third auxiliary rolling bearing). The rolling bearing 42 corresponds to the rolling bearing 31 (first auxiliary rolling bearing) and the rolling bearing 33 (second auxiliary rolling bearing).

An output member guide member 9 of Second Embodiment is composed of a lid portion 9b that covers the hole 2 and a columnar portion 9a that protrudes inward from the lid portion 9b into the housing 1. The output member guide member 9 is fixed to the housing 1 with a screw 21 at the lid portion 9b. As shown in FIG. 4B, in Second Embodiment, an end portion on the open end side and on the output member main body portion 4 side of the cylindrical hole 5a is an output member guide groove 8. In this output member guide groove 8, the columnar portion 9a is slidably provided. A spring 6 is received by the columnar portion 9a of the output member guide member 9 via a spring receiver 7. In the gripping device of First Embodiment, the output member guide member 9 of Second Embodiment may be employed in place of the pin-shaped output member guide member 9 of First Embodiment.

The operation of the gripping device of Second Embodiment is identical with the operation of the gripping device of First Embodiment, and hence the explanation thereof is omitted.

The gripping device of Second Embodiment particularly has the following advantages.

Being similar to First Embodiment, the output member guide groove 8 is formed at an end portion in the axial direction of the output member main body portion 4 that constitutes the output member 3. The gripping device has the output member guide member 9 that is provided in this output member guide groove 8. The output member guide member 9 is fixed to the housing 1. According to this configuration, the output member 3 moves in the axial direction while being supported (guided) by the output member guide member 9. Therefore, when the output member 3 presses and moves each claw member, the force (moment) of rotating the output member 3 acting as a reaction force is received by the output member guide member 9 fixed to the housing 1. Therefore, it is possible to stably move the output member 3 in the axial direction as compared to conventional cases.

The output member guide member 9 of Second Embodiment serves the role of covering the hole 2 to prevent debris, etc. from entering the hole 2, in addition to the role played by the output member guide member 9 in First Embodiment. Due to this, the number of components constituting the gripping device can be further reduced.

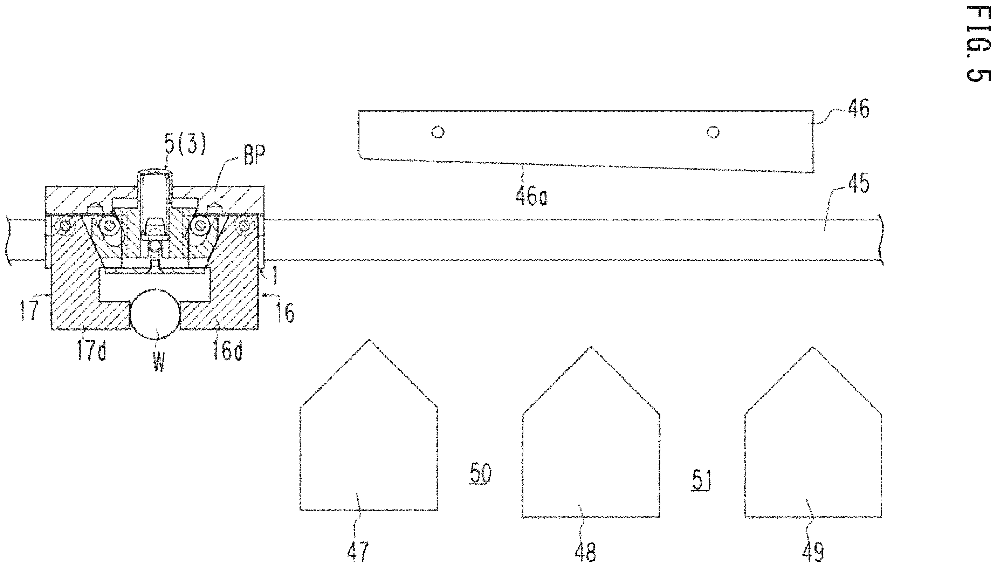

FIG. 5 to FIG. 7 show a modification of First Embodiment and a method of use thereof. A gripping device of the modification shown in FIG. 5 to FIG. 7 is used upside down in posture in comparison with the gripping device of First Embodiment. A claw portion 16d of a first claw member 16 provided in the gripping device of the modification is L-shaped and has a protrusion that protrudes toward the center of the housing 1. The same applies to a claw portion 17d of a second claw member 17. Each of the claw portion of the first claw member 16 and the claw portion of the second claw member 17 provided in the gripping device of First Embodiment is I-shaped and does not have a protrusion protruding toward the center of the housing 1.

The gripping device of the modifications shown in FIG. 5 to FIG. 7 is different from the gripping device of First Embodiment only in the shape of the claw portions of the first claw member 16 and the second claw member 17. In the gripping device of the modifications shown in FIG.s 5 to 7, reference symbols are not assigned to all components. This is because assigning reference symbols to all components would require the reference symbols to be so small that they become hard to read.

A base plate BP to which the gripping device is fixed runs on a rail 45 that is horizontally provided. A cam 46 is provided above the rail 45. The bottom surface of the cam 46 is a slope surface 46a. Below the rail 45, members 47, 48, and 49 are provided. The members 47, 48, and 49 that are horizontally aligned are members used for forming conveyance destinations of a workpiece W. A first conveyance destination 50 is formed between the members 47 and 48, and a second conveyance destination 51 is formed between the members 48 and 49.

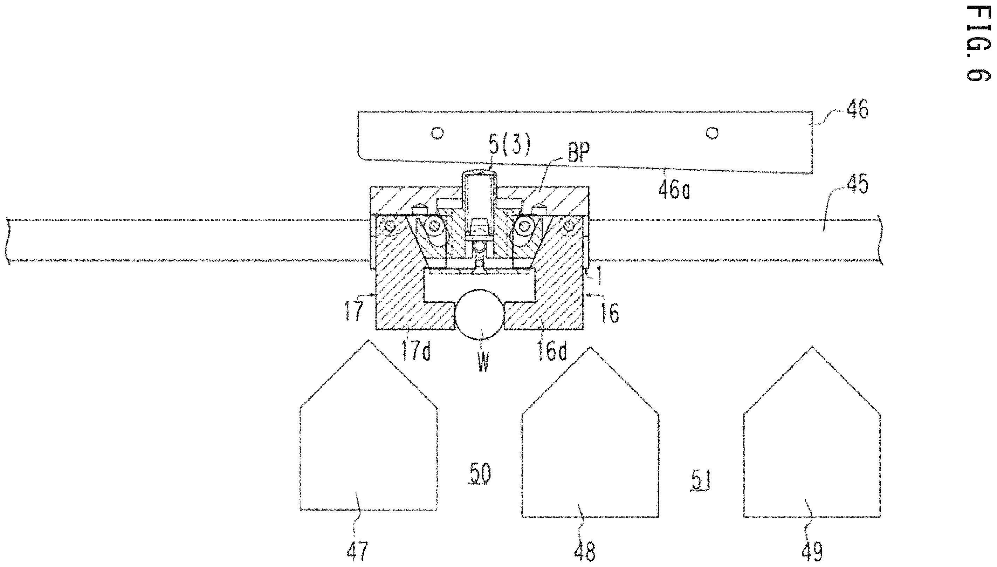

The gripping device that grips the workpiece W runs from left to right in the figures. As shown in FIG. 6, in the horizontal direction, when the gripping device reaches between the members 47 and 48, there is a gap between the slope surface 46a of cam 46 and an operating portion 5 of the gripping device. At this point, the gripping device is still gripping the workpiece W.

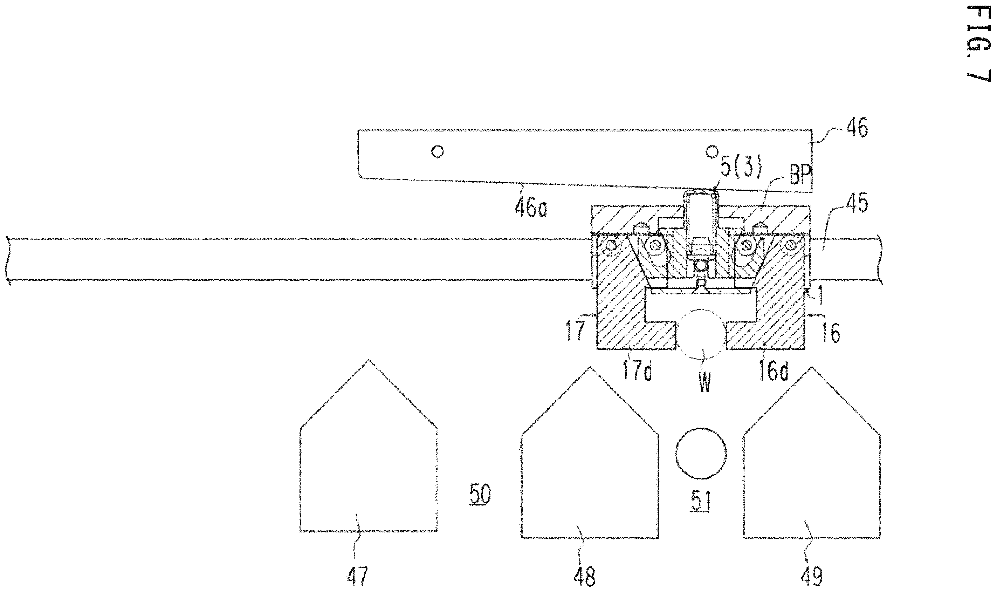

As the gripping device moves further rightward, the gripping device reaches between the members 48 and 49 in the horizontal direction as shown in FIG. 7. At this stage, the operating portion 5 of the gripping device engages with the slope surface 46a of the cam 46, and the operating portion 5 (output member 3) descends. As the output member 3 descends, the first claw member 16 and the second claw member 17 move in opposite directions, and the gap between the first claw member 16 and the second claw member 17 widens. Consequently, the workpiece W falls and the workpiece W enters the second conveyance destination 51.

On the other hand, in a case of a workpiece W that is smaller than the workpiece W shown in FIG. 5, the operating portion 5 of the gripping device that grips the workpiece W protrudes significantly upward from the base plate BP (housing 1) as compared to the cases shown in FIG. 5 and FIG. 6. Due to this, by appropriately designing, for example, the protrusion length of the operating portion 5 and the position in the up-down direction of the cam 46 relative to the gripping device, in the case of the workpiece W that is smaller than the workpiece W shown in FIG. 5, the operating portion 5 of the gripping device engages with the slope surface 46a of the cam 46 when the gripping device reaches between the members 47 and 48 in the horizontal direction as shown in FIG. 6. As a result, the gap between the first claw member 16 and the second claw portion 17 widens, the workpiece W falls from between the first claw member 16 and the second claw portion 17, and the workpiece W enters the first conveyance destination 50.

In this way, the small workpiece W enters the first conveyance destination 50, whereas the large workpiece W enters the second conveyance destination 51. The gripping device can be used not only for simply gripping a workpiece W but also for roughly sorting workpieces W by size.

The present invention is not limited to the embodiments above, and elements of the embodiments above can be combined as appropriate or various changes can be made to the embodiments, as long as not departing from the spirit of the present invention.

For example, the above-described embodiments are changeable as follows.

The fixing base to which the gripping device is fixed is not limited to the base plate BP fixed to a table of a machine tool, and may be any other fixing base.

The gripping object is not limited to the workpiece W, and may be a work pallet, a mold, etc.

The gripping device may have four or more claw members. That is, the gripping device may be a device that grips a gripping object from four or more directions.

In the gripping device of Second Embodiment, the first claw member 16, the second claw member 17, and the third claw member 34 are provided in the housing 1 at regular intervals in plan view. The disclosure, however, is not limited to this arrangement. The first claw member 16, the second claw member 17, and the third claw member 34 may not be provided at regular intervals, i.e., may not be even.

The installation posture of the gripping device is not limited to the vertical posture as in the embodiments. The installation posture of the gripping device may be a horizontal posture or an oblique posture.

### [Reference Signs List]

1: housing, 2: hole, 3: output member, 4: output member main body portion, 5: operating portion, 5a: cylindrical hole, 6: spring, 8: output member guide groove, 9: output member guide member, 12: first wedge groove, 12a: wedge surface, 12b: wedge surface, 13: second wedge groove, 13a: wedge surface, 13b: wedge surface, 16: first claw member, 17: second claw member, 18: first groove, 19: second groove, 22: first pin member, 23: rolling bearing (rolling bearing for first wedge groove), 24: first guide groove, 25: rolling bearing (first rolling bearing, 26: second pin member, 27: rolling bearing (rolling bearing for second wedge groove), 28: second guide groove, 29: rolling bearing (second rolling bearing), 30: first auxiliary pin member, 31: rolling bearing (first auxiliary rolling bearing), 32: second auxiliary pin member, 33: rolling bearing (second auxiliary rolling bearing), D: drive unit

## Claims

1. A gripping device comprising:
a housing (1);
an output member (3) which is provided in a hole (2) formed in the housing (1) to be movable in an axial direction of the hole (2);
a first claw member (16) which is provided next to the output member (3), the first claw member (16) being provided in a first groove (18) formed in the housing (1) so as to be movable in a direction intersecting with the axial direction;
a second claw member (17) which is provided next to the output member (3), the second claw member (17) being provided in a second groove (19) formed in the housing (1) so as to be movable in a direction intersecting with the axial direction;
a first pin member (22) which is provided in the first claw member (16), the first pin member (22) being provided inside a first wedge groove (12) formed in an output member main body portion (4) of the output member (3);
a second pin member (26) which is provided in the first claw member (17), the second pin member (26) being provided inside a second wedge groove (13) formed in the output member main body portion (4);
an output member guide member (9) which is fixed to the housing (1), the output member guide member (9) being provided in an output member guide groove (8) formed in an end portion in the axial direction of the output member main body portion (4); and
a drive unit (D) which is configured to move the output member (3) in the axial direction,
when the output member (3) is moved in the axial direction, an wedge surface (12a or 12b) of the first wedge groove (12) pressing the first pin member (22) and an wedge surface (13a or 13b) of the second wedge groove (13) pressing the second pin member (26), so as to cause the first claw member (16) and the second claw member (17) to move in different directions.

2. The gripping device according to claim 1, wherein,
the drive unit (D) includes:
an operating portion (5) of the output member (3), the operating portion (5) being provided on the side opposite to the output member guide groove (8) in the axial direction in the output member (3), being supported by an inner surface of the hole (2), and protruding outward from the hole (2); and
a spring (6) which is provided in a cylindrical hole (5a) formed in the operating portion (5) and is configured to bias the output member (3) in a direction opposite to a direction in which the operating portion (5) is pressed into the hole (2).

3. The gripping device according to claim 2, wherein,
the spring (6) is received by the output member guide member (9).

4. The gripping device according to any one of claims 1 to 3, wherein,
an end portion of the first pin member (22) is provided in a first guide groove (24) formed in an inner surface of the first groove (18), and
an end portion of the second pin member (26) is provided in a second guide groove (28) formed in an inner surface of the second groove (19).

5. The gripping device according to claim 4, further comprising a first auxiliary pin member (30) which is provided in the first claw member (16) and a second auxiliary pin member (32) which is provided in the second claw member (17),
an end portion of the first auxiliary pin member (30) being provided in the first guide groove (24) whereas an end portion of the second auxiliary pin member (32) being provided in the second guide groove (28).

6. The gripping device according to any one of claims 1 to 5, wherein,
a rolling bearing (23) for the first wedge groove is provided between the first pin member (22) and the first wedge groove (12), and
a rolling bearing (27) for the second wedge groove is provided between the second pin member (26) and the second wedge groove (13).

7. The gripping device according to claim 4 or 5, wherein,
the end portion of the first pin member (22) is provided in the first guide groove (24) via a first rolling bearing (25), and
the end portion of the second pin member (26) is provided in the second guide groove (28) via a second rolling bearing (29).

8. The gripping device according to claim 5, wherein,
the end portion of the first auxiliary pin member (30) is provided in the first guide groove (24) via a first auxiliary rolling bearing (31), and
the end portion of the second auxiliary rolling bearing (32) is provided in the second guide groove (28) via a second auxiliary pin member (33).
